# EUROPEAN PATENT SPECIFICATION

(11) **EP 3 593 272 B1**
(45) Date of publication and mention of the grant of the patent: **27.01.2021**
(21) Application number: 18704573.7
(22) Date of filing: 19.02.2018
(51) Int. Cl.: G06K 7/10, B65B 35/58

(54) **DEVICE AND METHOD OF READING A MARK PRINTED ON CONTAINERS MOVING ALONG A CONVEYOR**
VORRICHTUNG UND VERFAHREN ZUM LESEN VON EINER AUF BEHÄLTERN, DIE SICH ENTLANG EINES FÖRDERERS BEWEGEN, AUFGEDRUCKTEN MARKIERUNG
DISPOSITIF ET PROCÉDÉ DE LECTURE D'UNE MARQUE IMPRIMÉE SUR DES RÉCIPIENTS SE DÉPLAÇANT LE LONG D'UN CONVOYEUR

(30) Priority: 05.04.2017 US 201762481887 P; 04.05.2017 EP 17169495
(43) Date of publication of application: 15.01.2020
(73) Proprietor: SICPA HOLDING SA, 1008 Prilly (CH)
(72) Inventor: EARL, Sherwin, Germantown, Maryland 20874 (US); MILLER, Lonny, Woodbridge, Virginia 22191 (US)
(74) Representative: Clarke Modet & Co.
(86) International application number: PCT/EP2018/054003
(87) International publication number: WO 2018/184760

(56) References cited:
- EP-A2- 0 256 804
- US-A- 3 986 323
- US-A- 5 451 125
- US-A1- 2006 277 269
- US-A1- 2014 284 380

## Description

### FIELD

The present disclosure is comprised in the field of ID readers. In particular, the invention relates to methods and systems for detecting and identifying marks or signs, such as barcodes, printed on a lateral wall of containers moving along a line.

### BACKGROUND

ID readers are currently used to track and sort objects moving along a line (for instance by means of a conveyor) in manufacturing and logistics operations. The ID reader can be positioned over the line at an appropriate viewing angle to acquire any expected IDs on respective objects as they each move through the field of view. The focal distance of the reader with respect to the object can vary, depending on the placement of the reader with respect to the line and the size of the object. A larger object may cause IDs thereon to be located closer to the reader, while a smaller object may contain IDs that are further from the reader. In each case, the ID should appear with sufficient resolution to be properly imaged and decoded. Therefore, the field of view of a single reader, particularly in with widthwise direction (perpendicular to line motion) is often limited. Where an object and/or the line is relatively wide, the lens and sensor of a single ID reader may not have sufficient field of view in the widthwise direction to cover the entire width of the line while maintaining needed resolution for accurate imaging and decoding of IDs. Failure to image the full width can cause the reader to miss IDs that are outside of the field of view.

Several techniques can be employed to overcome the limitation in field of view of a single ID reader and expand the overall field of view in the widthwise direction. For instance, a line-scan system with inherently wider FOV can be employed; however, this arrangement increase complexity and costs as it requires more specialized hardware (an encoder is often needed to sense relative movement of the line when using a line-scan arrangement). Another technique is to employ a larger sensor in the single ID reader to provide the desired resolution for appropriately imaging the scene along the widthwise direction; however, this approach entails additional cost through the use of less-conventional hardware and an enlarged FOV resolution. The increased height direction may cause the sensor to capture the same ID in a plurality of captured image frames as the object passes through the enlarged field of view. This, in turn leads to extraneous processing and/or decoding of the same ID and the risk that a single object is mistaken for a plurality of objects passing under the reader. Another technique is disclosed in patent document EP2624042-B1, which provides a field of view expander using several mirrors.

However, when the object moving along the line is a container, and the mark to be read is a barcode printed on a cylindrical portion of the lateral wall of the container, the use of a single ID reader does not guarantee the correct identification and reading of the mark, even if the field of view of the single ID reader has been expanded. The mark may be placed on the opposite side of the lateral wall relative to the framing of the ID reader, such that the container passes thorough the reading area undetected.

To make sure that the mark printed on the cylindrical portion of the container is always read, one can employ multiple ID readers or cameras disposed around a reading area of the line such that at least one of the cameras is able to capture the mark of the container. For example, known systems require the use of four cameras to read the mark printed on a bottle or can. However, this solution presents several drawbacks. Firstly, this is an expensive and complex solution that requires additional hardware and optics (several cameras) which in some cases must be fully synchronized. Moreover, this system cannot guarantee that every container will present a full view of the mark to one of the cameras while progressing down the conveyer. For example, when the conveyor transporting the containers is wide enough to allow two or more containers passing by at the same time, the mark printed on some of these containers may be obfuscated (e.g. partially or fully covered) by the presence of other containers blocking the field of view. Besides, the special arrangement of the mark on a cylindrical wall makes it difficult to capture the full mark by one camera (i.e. in some cases the cameras only can partially capture the mark), rendering the barcode undetected, unless a specific and complex software is used to integrate the different images of the cameras to detect the mark (e.g. by stitching the different barcode fragments to generate an entire code). Furthermore, when the line is running fast (e.g. with a feeding frequency of more than 80 containers per minute), all these problems are aggravated.

Therefore, there is a need for a device and method that allows safe capture, with a success rate of 100%, of marks (such as 1D or 2D barcodes) printed on a container moving on a horizontal conveyer. Preferably, container codes must be read at a rate capable of sustaining the line feeding frequency for these kinds of containers (normally of around 60 to 120 containers per minute).

Following devices and methods are also known from the prior art:
US patent application US 2014/284380 A1 describes a readout device and a method for reading out machine-readable markings on receptacles (containers), the device having a camera with a viewing region to detect the markings, a flat roll area and a band conveyor which contact the lateral side of the containers such that the containers are moved and rolled in succession over the roll area by means of the conveyor and, in so doing, at least part of the lateral surface of the containers is rolled within the viewing region and the marking can be read out. The roll area has, within the viewing region, a movable portion being a band conveyor moving in the direction opposite to the band conveyor when the location of the container within the viewing region is detected, so as to promote the rotation of the container.

US patent application US 2006/277269 A1 discloses a method and apparatus for precise application of a patient-specific label to a pre-filled stock container, the apparatus comprising a conveyor to transport pre-filled containers, a drive roller spinning the container clamped against the roller by a gripper in the area of the conveyor where the label is applied onto the lateral side of the container and/or the camera reads the label. The gripper which pushes the container against the roller comprises gripper member, idler roller supports, idler rollers, actuators pistons and linkages to position the container.

European Patent application EP 0 256 804 A2 relates to an apparatus for reading codes on containers, which comprises a belt being a part of a motor and pulley assembly and a pair of wheels to counter the belt, for rotating the bottle while being supported on a plate (or a conveyor surface) at an inspection site. As the bottle is rotated, the code element provided thereon passes in front of an optical scanning head which reads the code.

### SUMMARY

The present invention refers to a device and a method of reading a mark printed on a lateral portion of containers moving along a line or conveyor that overcome the above-mentioned problems. With this device and method, the containers running on a conveyor are pushed against a drive device which spins the container, so that a camera is able to read the mark applied on the container.

For the description of the present invention the following definitions will be considered hereinafter:
- Line: elements in a system, included for instance in a plant or factory, for processing and/or conveying products, such as for example a packaging line, filling line, storage line, manufacturing line and assembly line.
- Conveyor: means of transport for products in a line, such as e.g. a belt conveyor system or a roller conveyor. The conveyor is usually arranged in the horizontal plane but it may also include ramps and direction changes.
- Container: a term normally used in a line referring to products, objects or receptacles being transported through the line for quality assessment, product identification and traceability, inventory and warehouse management, production monitoring, etc. The container may be made of different materials, such as for example metal, plastic or glass. The containers include bottles, cans, tins, and water carboys.
- Mark or identity (ID): Any sign or symbol, text or graphic, including but not limited to identification codes, printing inks and barcodes (e.g. 1D or 2D barcodes), printed or attached to a container, mainly for identification, inventory or classification purposes.
- Lateral portion of a container: an area of the lateral wall of the container on which the mark is printed, or attached to. The lateral portion may be cylindrical.
- Reading area: zone of the conveyor in which the reading or identification of the mark is performed.
- Spinner: any means for contacting the container to apply torque and generate
rotation, such as a roller spinning at high speed and contacting the lateral wall of the container.
- Drive unit: an electric and/or electronic module comprising a motor for activating the spinner.
- High-speed camera: device suitable for recording fast-moving objects, such as containers rotating at speeds higher than 300 rpm.

In accordance with one aspect of the present invention there is provided a method of reading a mark printed on containers moving along a conveyor, according to claim 1.

In an embodiment, the containers are supplied into the reading area one at a time. The method may further comprise retaining the container in the reading area by exerting force against the running direction of the conveyor.

According to an embodiment, the method also comprises extracting the container out of the reading area; for instance, by propelling the container with a high-pressure air flow. The reading of the mark is preferably performed while the container is positioned in the reading area. Alternatively, the reading may be performed after the container has left the reading area (e.g. in another direction or even another conveyor).

For a better control and synchronization of the reading, the method may also comprise detecting the container when entering the reading area. The mark is preferably registered and detected using a high-speed camera, due to the high spinning speed of the container.

In accordance with a further aspect of the present invention there is provided an apparatus or device for reading a mark printed on containers moving along a conveyor, wherein the mark is printed on a lateral portion of the container, according to claim 9.

According to an embodiment, the spinner comprises a knurled roller.

The device may further comprise an ejector for extracting the container out of the reading area. In an embodiment, the ejector is configured to propel the container using a high-pressure air flow. Alternatively, the ejector may directly hit the container to exert contact force (e.g. a piston or a lever).

In an embodiment, the device comprises one or more retention elements configured to retain the container in the reading area by exerting force at least against the running direction of the conveyor.

The features, functions, and advantages that have been discussed can be achieved independently in various embodiments or may be combined in yet other embodiments further details of which can be seen with reference to the following description and drawings.

### BRIEF DESCRIPTION OF THE DRAWINGS

A series of drawings which aid in better understanding the invention and which are expressly related with an embodiment of said invention, presented as a non-limiting example thereof, are very briefly described below.
Figure 1A depicts a linear barcode printed on a cylindrical container. Figure 1B shows a 2D barcode printed on a bottle.
Figure 2 shows a perspective view of the device for reading barcodes on containers according to an embodiment of the present invention.
Figure 3 represents a front view of the device.
Figure 4 illustrates the device working on a packaging line carrying multiple containers towards the reading area.
Figure 5 depicts a container being angularly accelerated in the reading area, while the high-speed camera detects the barcode.
Figure 6 represent a block diagram of the device according to an embodiment.
Figure 7 shows a flow diagram of the method according to an embodiment.

### DETAILED DESCRIPTION

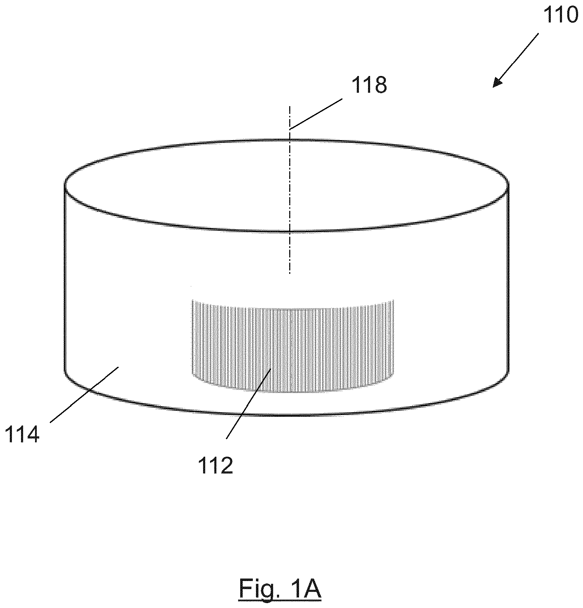

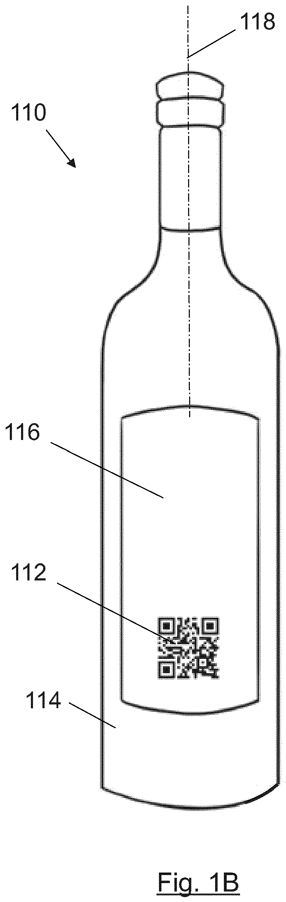

The present invention relates to a method and device for reading a mark 112 printed on a lateral portion 114 of the lateral wall of a container 110, as depicted in **Figures 1A** and **1B****.** In the container shown in these figures, the lateral portion is a cylindrical portion. The container 110 has a circular base and a vertical axis 118 around which the container 110 can rotate. The container may be, for instance, a can (Figure 1A) or a bottle (Figure 1B). The mark 112 may be a sign, an identification code, a barcode or any other text or graphic symbol printed on a label 116 attached to, or directly printed on, the lateral portion 114 of the lateral wall of the container 110. The barcode may be, for instance, a linear barcode, as in Figure 1A, or a matrix barcode (e.g. Data Matrix, QR codes), as in the example of Figure 1B.

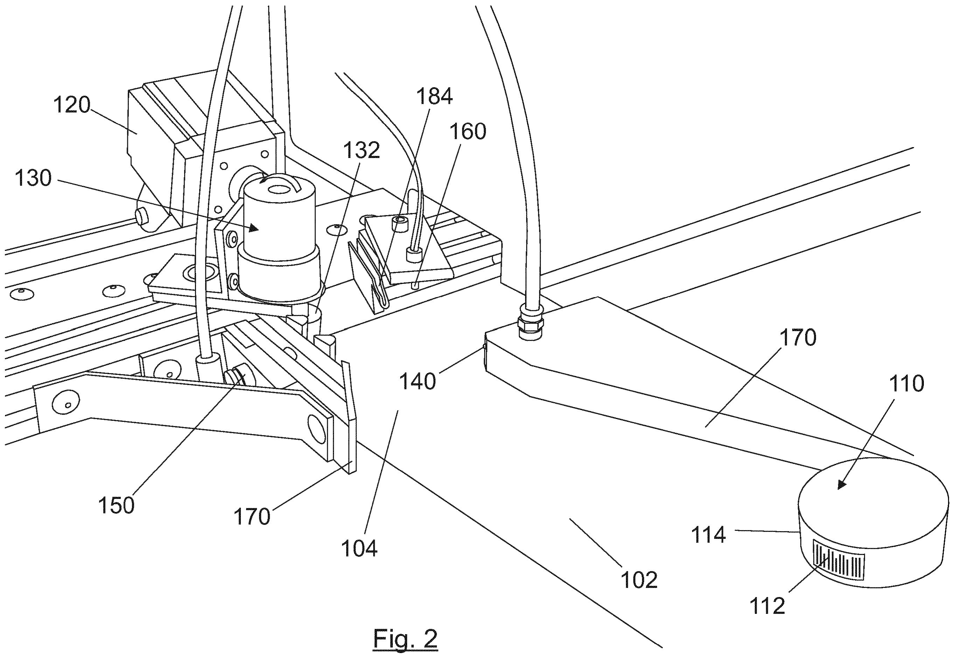

According to an embodiment, the components of the device are depicted in the perspective view of **Figure 2****.** The containers 110 move along a line (e.g. a conveyor belt in a packaging line) at high speed. The device can perform a mark reading at rates higher than 80 containers per minute. In the embodiment of Figure 2, the conveyor 102 belt drives the containers 110 to a reading area 104. Guiding means for directing the containers 110 towards the reading area 104 may be provided on the conveyor 102, such that the containers 110 arrive at the reading area 104 one at a time. The guiding means may be implemented, for instance, as one or more funnel-shaped channels 170 forcing the containers 110 to move towards the reading area 104. The containers 110 moving on the conveyor 102 reach the reading area 104 separately, one by one, and a detector 160 (e.g. a photoelectric sensor) detects the container 110 when entering the reading area 104.

A drive unit 130 applies angular momentum to the container 110 located in the reading area 104, rotating the container 110 along its vertical axis 118. A camera 120, preferably a high-speed camera, is arranged in a tilted position above the conveyor 102 for reading the mark 112 printed on the lateral portion 114 of the container 110 while the container 110 is spinning. As the container 110 rotates in front of the camera 120, the latter has several opportunities to capture the mark 112. The mark 112 is captured in the allotted time frame so that the overall throughput of the line is not affected (further containers 110 enter the reading area 104 at a high rate).

In an embodiment, the camera 120 is positioned next to the reading area 104, as shown for instance in Figure 2, so that the mark reading is carried out when the container 110 is still positioned in the reading area 104. The start of the reading is synchronized with the detection made by the detector 160. Before applying any torque, the angular velocity of the container 110 entering the reading area 104 is normally zero. The camera 120 starts recording multiple images of the lateral wall of the container 110 while the angular velocity is speeding up. The high frame rate of the images captured by the camera 120 allows detection and identification of the mark 112.

In another different embodiment, not shown in the figures, the camera 120 may be located at a different station of the processing line, away from the reading area 104. In that case, the container 110 is extracted from the reading area 104 with the force exerted by an ejector 150, sending the container 110 (while still spinning) to a different conveyor where the camera 120 is arranged.

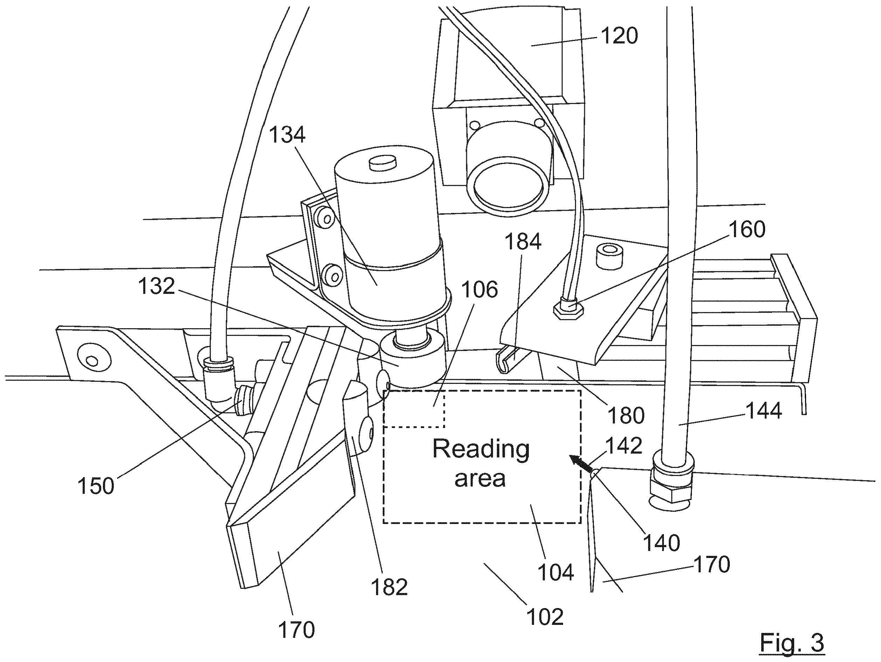

**Figure 3** represents a front view of the reading area 104, according to an embodiment. In this embodiment the drive unit 130 comprises a spinner 132 activated by a motor 134 (e.g. a DC or a stepper motor) managed by a motor control unit. The spinner may be, for instance, a wheel or drive roller. In the embodiment of Figure 3 a knurled roller, of about 25mm-diameter, is mounted on a 6mm shaft, and the diameter of the containers is around 63 mm. The motor speed is controlled by the motor control unit and the spinner 132 is connected to the shaft of the drive motor. The wheel 132 generates rotational movement of the container 110 through friction between the knurled roller and the lateral wall of the container. In an embodiment, the motor rotates within a range of 600 - 1000 rpm, and at full speed the container reaches a maximum rotating speed of about 285 - 315 rpm (the spinning speed of the container depends on multiple factors, such as the weight, torque applied, slip, belt surface friction parameter, etc.).

The wheel 132 is arranged at a first zone 106 of the reading area 104, hanging suspended at a certain height above the conveyor 102. The rotating wheel 132 engages the lateral wall of the container 110, applying torque. To facilitate engagement between the wheel 132 and the container 110, a pushing assembly simultaneously exerts a force on the container 110 to push it towards the first zone 106 and ensure consistent rotational movement of the container 110. The pushing assembly assists in forcing contact between the drive wheel 132 and the container.

The pushing assembly may be implemented with an air knife 140 that ejects a high-pressure air flow 142 towards the first zone 106 of the reading area 104. The air knife 140 employs a pressurized air source 142 and appropriately angled nozzles to direct the air stream against the container 110, forcing the container to contact the wheel 132.

In another embodiment, not shown in the figures, instead of using an air flow the pushing assembly may exert physical, mechanical contact. For instance, the pushing assembly may comprise a roller assembly that exerts contact force on the lateral wall of the container 110 towards the first zone 106 of the reading area 104, pushing and holding the container against the wheel 132. The pushing assembly may also comprise a linkage unit, such as a connecting rod, and an electromechanical solenoid or a pneumatic solenoid for electronic control and activation of the linkage unit.

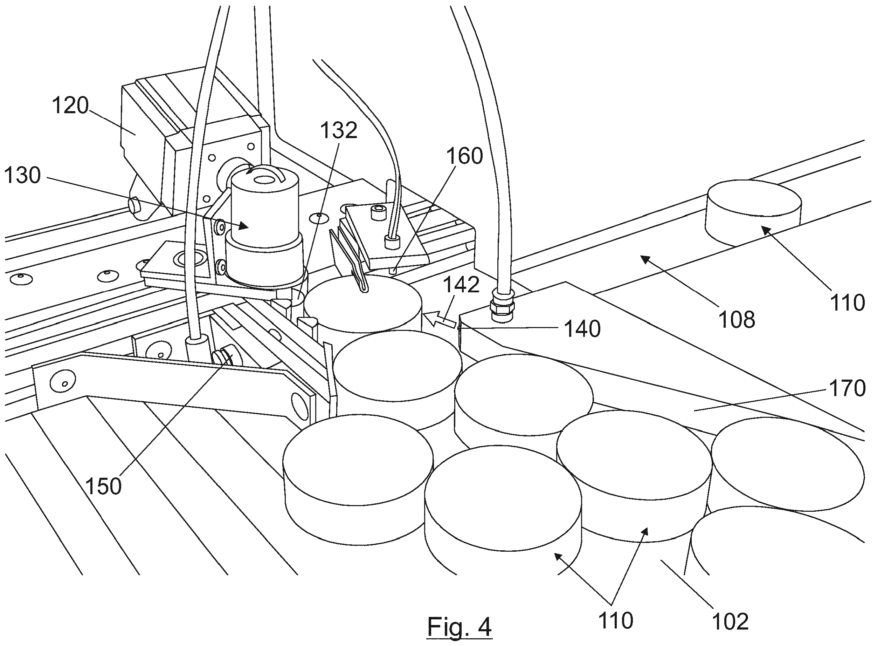

A running packaging line is shown in **Figure 4****.** Multiple containers 110 are carried by the conveyor 102 having a width that allows two or more containers running in parallel. The guiding means 170 drive the containers 110 such that they arrive at the reading area 104 one at a time.

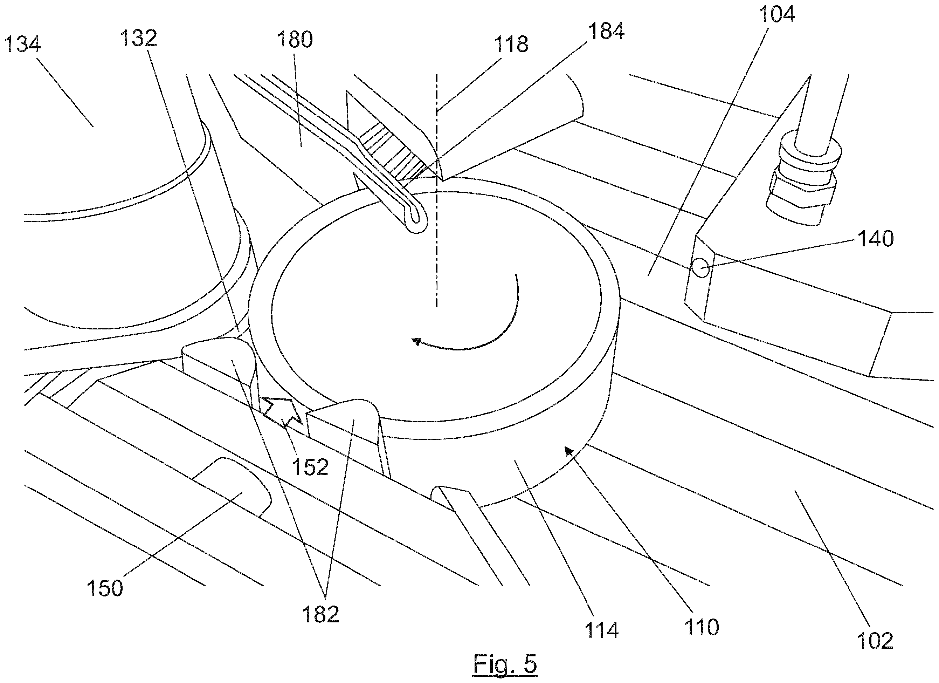

**Figure 5** depicts an individual container 110 spinning within the reading area 104. The device comprises a retention element 180 disposed at an end of the reading area 104 for retaining the container 110 inside the reading area 104 by exerting force against the running direction of the conveyor 102. The device may further comprise lateral retention elements 182 disposed laterally with respect to the running direction of the belt, and an upper retention element 184 disposed at a higher position than the maximum height of the container 110 to avoid the container 110 accidentally jumping out of the conveyor 102 when the torque and/or the high-pressure air flows (142, 152) are applied.

Once the mark 112 has been read, or at a predetermined timing, the ejector 150 is activated to extract the container 110 out of the reading area 104 and allow an additional container 110 entering the reading area 104. In the embodiment of Figure 5, the container 110 is propelled using a high-pressure air flow 152 (which in this embodiment is perpendicular to the line motion, the running direction of the conveyor 102), being driven up to another conveyor 108.

The activation of some of the electronically-controllable elements of the device can be synchronized once the detection of the container 110 is performed by the photoelectric sensor. In an embodiment, this detection triggers, with an appropriate timing, the high-pressure air flow 142 from the air knife 140 and the rotation of the drive wheel 132. After a predetermined time, the high-pressure air flow 152 from the ejector 150 is activated to drive the container out of the reading area 104 onto another conveyor 108 (the air knife 140 may be deactivated a short time to facilitate extraction of the container).

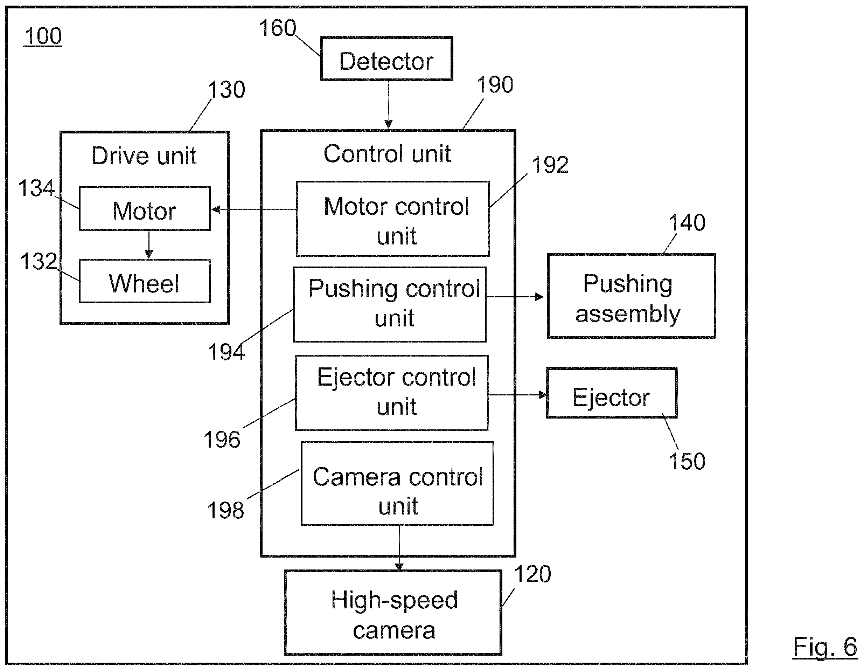

**Figure 6** illustrates an exemplary embodiment of a block diagram including the relevant elements of the device 100. The detector 160 sends a signal to a control unit 190, which may comprise a microprocessor, a microcontroller, a PLC, a FPGA or any other electronically programmable device. A motor control unit 192, a pushing control unit 194 and an ejector control unit 196 are responsible for controlling the activation of the motor 134, the pushing assembly 160 and the ejector 150, respectively. The camera 120 is managed by a camera control unit 194. The detection signal received from the detector 160 is used by the control unit 190 to synchronize the activation of the different elements.

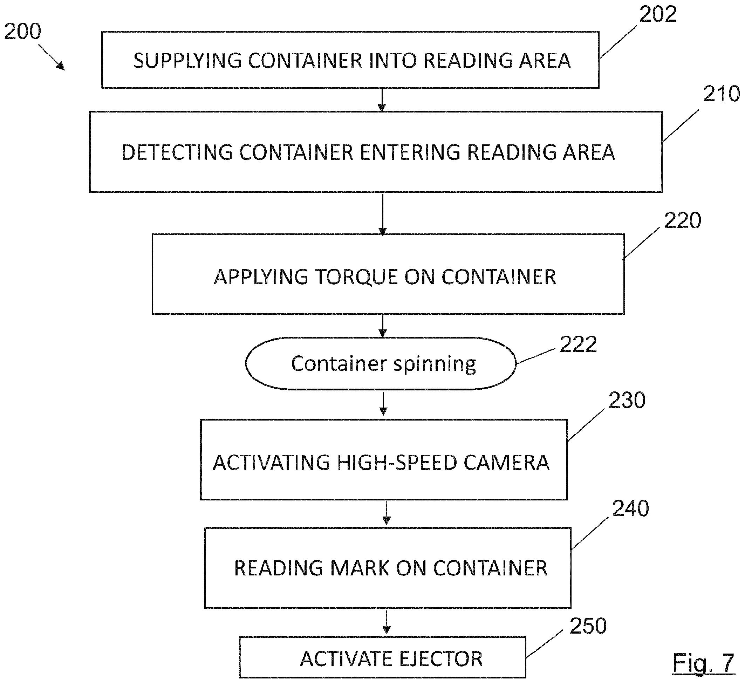

In **Figure 7** a flow diagram of an exemplary embodiment of the method 200 is depicted. A container 110 is supplied 202 into a reading area 104. Once the container 110 reaches the reading area 104, the container 110 is detected 210 and a torque 220 is applied on the container 110, such that the container spins 222 along its vertical axis 118. The control unit 190 activates the high-speed camera 230 to read the mark 240 printed on the container while the container 110 is spinning. Finally, the ejector 150 is activated 250 by the control unit 190 to propel the container 110 out of the reading area 104.

## Claims

1. A method of reading a mark printed on containers moving along a conveyor (102), wherein the mark (112) is printed on a lateral portion (114) of the containers (110), the method (200) comprising:
supplying (202) a container (110) into a reading area (104);
applying torque (220) on the container (110) at least in the reading area (104), generating rotation of said container (110) along a vertical axis (118) thereof;
reading the mark (240) of the container (110) while the container (110) is spinning, **characterized in that** the step of generating rotation of the container (110) comprises applying torque by a spinner (132) on a lateral wall of the container (110) at a first zone (106) of the reading area (104), and pushing the container (110) against the spinner (132) to ensure rotational movement of the container (110), wherein the step of pushing the container (110) against the spinner (132) comprises applying of a high-pressure air flow (142) directed at least partially towards the first zone (106) of the reading area (104).

2. The method of claim 1, comprising supplying (202) containers (110) into the reading area (104) one at a time.

3. The method of claim 1 or claim 2, further comprising extracting the container (110) out of the reading area (104).

4. The method of claim 3, wherein the extraction of the container (110) comprises propelling the container (110) with a high-pressure air flow (152).

5. The method of any preceding claim, further comprising retaining the container (110) in the reading area (104) by exerting force against the running direction of the conveyor (102).

6. The method of any preceding claim, wherein the reading of the mark (112) is performed while the container (110) is positioned in the reading area (104).

7. The method of any preceding claim, further comprising detecting (210) the container (110) entering the reading area (104).

8. The method of any preceding claim, wherein the reading of the mark (230) is performed using a high-speed camera.

9. A device for reading a mark printed on containers moving along a conveyor (102), wherein the mark (112) is printed on a lateral portion (114) of the container (110), the device (100) comprising:
a drive unit (130) configured to apply torque on a container (110) at least in a reading area (104), to generate rotation of the container (110) along a vertical axis (118) thereof;
a camera (120) configured to read the mark (112) of the container (110) while the container (110) is spinning, **characterized in that** the drive unit (130) comprises a spinner (132) activated by a motor (134), the spinner (132) being arranged at a first zone (106) of the reading area (104) for applying torque on a lateral wall of the container (110),
wherein the device (100) further comprises a pushing assembly configured to drive the container (110) towards the first zone (106) to ensure rotational movement of the container (110),
wherein the pushing assembly comprises an air knife (140), configured to apply a high-pressure air flow (142) directed at least partially towards the first zone (106) of the reading area (104).

10. The device of claim 9, wherein the spinner (132) comprises a knurled roller.

11. The device of any of claims 9 to 10, comprising an ejector (150) for extracting the container (110) out of the reading area (104).

12. The device of claim 11, wherein the ejector (150) is configured to propel the container (110) using a high-pressure air flow (152).

13. The device of any of claims 9 to 12, comprising at least one retention element (180) configured to retain the container (110) in the reading area (104) by exerting force against the running direction of the conveyor (102).

14. The device of any of claims 9 to 13, wherein the camera (120) is a high-speed camera.

## Patentansprüche

1. Ein Verfahren zum Lesen einer Markierung, die auf Behältern aufgedruckt ist, die sich entlang eines Förderers (102) bewegen, wobei die Markierung (112) auf einem Seitenabschnitt (114) der Behälter (110) aufgedruckt ist, wobei das Verfahren (200) umfasst:
Zuführen (202) eines Behälters (110) in einen Lesebereich (104);
Anwenden eines Drehmoments (220) auf den Behälter (110) zumindest in dem Lesebereich (104), indem eine Drehung des Behälters (110) entlang einer vertikalen Achse (118) davon erzeugt wird;
Lesen der Markierung (240) des Behälters (110), während sich der Behälter (110) dreht, **dadurch gekennzeichnet, dass** der Schritt des Erzeugens der Drehung des Behälters (110) das Anwenden eines Drehmoments durch einen Dreher (132) auf eine Seitenwand des Behälters (110) in einer ersten Zone (106) des Lesebereichs (104) umfasst, und Schieben des Behälters (110) gegen den Dreher (132), um eine Drehbewegung des Behälters (110) zu bewirken, wobei der Schritt des Schiebens des Behälters (110) gegen den Dreher (132) das Anwenden eines Hochdruckluftstroms (142) umfasst, der zumindest teilweise auf die erste Zone (106) des Lesebereichs (104) gerichtet ist.

2. Das Verfahren nach Anspruch 1, umfassend das Zuführen (202) von Behältern (110) in den Lesebereich (104), einen nach dem anderen.

3. Das Verfahren nach Anspruch 1 oder Anspruch 2, ferner umfassend das Herausziehen des Behälters (110) aus dem Lesebereich (104).

4. Das Verfahren nach Anspruch 3, wobei das Herausziehen des Behälters (110) das Antreiben des Behälters (110) mit einem Hochdruckluftstrom (152) umfasst.

5. Das Verfahren nach einem vorhergehenden Anspruch, ferner umfassend das Zurückhalten des Behälters (110) im Lesebereich (104) durch Ausüben von Kraft entgegen der Laufrichtung des Förderers (102).

6. Das Verfahren nach einem vorhergehenden Anspruch, wobei das Lesen der Markierung (112) durchgeführt wird, während der Behälter (110) im Lesebereich (104) positioniert ist.

7. Das Verfahren nach einem vorhergehenden Anspruch, ferner umfassend das Erkennen (210), dass der Behälter (110) in den Lesebereich (104) eintritt.

8. Das Verfahren nach einem vorhergehenden Anspruch, wobei das Lesen der Markierung (230) unter Verwendung einer Hochgeschwindigkeitskamera durchgeführt wird.

9. Eine Vorrichtung zum Lesen einer Markierung, die auf Behältern aufgedruckt ist, die sich entlang eines Förderers (102) bewegen, wobei die Markierung (112) auf einem Seitenabschnitt (114) des Behälters (110) aufgedruckt ist, wobei die Vorrichtung (100) umfasst:
eine Antriebseinheit (130), die dazu eingerichtet ist, ein Drehmoment auf einen Behälter (110) zumindest in einem Lesebereich (104) anzuwenden, um eine Drehung des Behälters (110) entlang einer vertikalen Achse (118) davon zu erzeugen;
eine Kamera (120), die dazu eingerichtet ist, die Markierung (112) des Behälters (110) zu lesen, während sich der Behälter (110) dreht, **dadurch gekennzeichnet, dass** die Antriebseinheit (130) einen Dreher (132) umfasst, der durch einen Motor (134) aktiviert wird, wobei der Dreher (132) an einer ersten Zone (106) des Lesebereichs (104) angeordnet ist, um ein Drehmoment auf eine Seitenwand des Behälters (110) anzuwenden,
wobei die Vorrichtung (100) ferner eine Schiebeanordnung umfasst, die dazu eingerichtet ist, den Behälter (110) in Richtung der ersten Zone (106) zu treiben, um eine Drehbewegung des Behälters (110) zu bewirken,
wobei die Schiebeanordnung ein Luftmesser (140) umfasst, das dazu eingerichtet ist, einen Hochdruckluftstrom (142) anzuwenden, der zumindest teilweise auf die erste Zone (106) des Lesebereichs (104) gerichtet ist.

10. Die Vorrichtung nach Anspruch 9, wobei der Dreher (132) eine Rändelrolle umfasst.

11. Die Vorrichtung nach einem der Ansprüche 9 bis 10, umfassend einen Auswerfer (150) zum Herausziehen des Behälters (110) aus dem Lesebereich (104).

12. Die Vorrichtung nach Anspruch 11, wobei der Auswerfer (150) dazu eingerichtet ist, den Behälter (110) unter Verwendung eines Hochdruckluftstroms (152) anzutreiben.

13. Die Vorrichtung nach einem der Ansprüche 9 bis 12, umfassend mindestens ein Rückhalteelement (180), das dazu eingerichtet ist, den Behälter (110) im Lesebereich (104) zurückzuhalten, indem es eine Kraft entgegen der Laufrichtung des Förderers (102) ausübt.

14. Die Vorrichtung nach einem der Ansprüche 9 bis 13, wobei die Kamera (120) eine Hochgeschwindigkeitskamera ist.

## Revendications

1. Procédé de lecture d'une marque imprimée sur des récipients se déplaçant le long d'un convoyeur (102), dans lequel la marque (112) est imprimée sur une partie latérale (114) des récipients (110), le procédé (200) comprenant :
la fourniture (202) d'un récipient (110) dans une zone de lecture (104) ;
l'application d'un couple (220) sur le récipient (110) au moins dans la zone de lecture (104), en générant une rotation dudit récipient (110) le long d'un axe vertical (118) de celui-ci ;
la lecture de la marque (240) du récipient (110) tandis que le récipient (110) tourne, **caractérisé en ce que** l'étape de génération d'une rotation du récipient (110) comprend l'application d'un couple par un dispositif rotatif (132) sur une paroi latérale du récipient (110) au niveau d'une première zone (106) de la zone de lecture (104), et la poussée du récipient (100) contre le dispositif rotatif (132) pour assurer un mouvement de rotation du récipient (110), dans lequel l'étape de poussée du récipient (110) contre le dispositif rotatif (132) comprend l'application d'un flux d'air haute pression (142) dirigé au moins partiellement vers la première zone (106) de la zone de lecture (104).

2. Procédé selon la revendication 1, comprenant la fourniture (202) de récipients (110) dans la zone de lecture (104) un par un.

3. Procédé selon la revendication 1 ou la revendication 2, comprenant en outre l'extraction du récipient (110) hors de la zone de lecture (104).

4. Procédé selon la revendication 3, dans lequel l'extraction du récipient (110) comprend la propulsion du récipient (110) avec un flux d'air haute pression (152).

5. Procédé selon une quelconque revendication précédente, comprenant en outre le maintien du récipient (110) dans la zone de lecture (104) en exerçant une force contre la direction de déplacement du convoyeur (102).

6. Procédé selon une quelconque revendication précédente, dans lequel la lecture de la marque (112) est effectuée pendant que le récipient (110) est positionné dans la zone de lecture (104).

7. Procédé selon une quelconque revendication précédente, comprenant en outre la détection (210) du récipient (110) entrant dans la zone de lecture (104).

8. Procédé selon une quelconque revendication précédente, dans lequel la lecture de la marque (230) est effectuée à l'aide d'une caméra à grande vitesse.

9. Dispositif de lecture d'une marque imprimée sur des récipients se déplaçant le long d'un convoyeur (102), dans lequel la marque (112) est imprimée sur une partie latérale (114) du récipient (110), le dispositif (100) comprenant :
une unité d'entraînement (130) conçue pour appliquer un couple sur un récipient (110) au moins dans une zone de lecture (104), pour générer une rotation du récipient (110) le long d'un axe vertical (118) de celui-ci ;
une caméra (120) conçue pour lire la marque (112) du récipient (110) tandis que le récipient (110) tourne, **caractérisé en ce que** l'unité d'entraînement (130) comprend un dispositif rotatif (132) activé par un moteur (134), le dispositif rotatif (132) étant agencé dans une première zone (106) de la zone de lecture (104) pour appliquer un couple sur une paroi latérale du récipient (110),
dans lequel le dispositif (100) comprend en outre un ensemble de poussée conçu pour entraîner le récipient (110) vers la première zone (106) pour assurer un mouvement de rotation du récipient (110),
dans lequel l'ensemble de poussée comprend une lame d'air (140), conçue pour appliquer un flux d'air haute pression (142) dirigé au moins partiellement vers la première zone (106) de la zone de lecture (104).

10. Dispositif selon la revendication 9, dans lequel le dispositif rotatif (132) comprend un rouleau moleté.

11. Dispositif selon l'une quelconque des revendications 9 à 10, comprenant un éjecteur (150) pour extraire le récipient (110) hors de la zone de lecture (104).

12. Dispositif selon la revendication 11, dans lequel l'éjecteur (150) est conçu pour propulser le récipient (110) à l'aide d'un flux d'air haute pression (152).

13. Dispositif selon l'une quelconque des revendications 9 à 12, comprenant au moins un élément de retenue (180) conçu pour maintenir le récipient (110) dans la zone de lecture (104) en exerçant une force contre la direction de déplacement du convoyeur (102).

14. Dispositif selon l'une quelconque des revendications 9 à 13, dans lequel la caméra (120) est une caméra à grande vitesse.
